# EUROPEAN PATENT APPLICATION

(11) **EP 4 707 739 A1**
(43) Date of publication of application: **11.03.2026**
(21) Application number: 24199317.9
(22) Date of filing: 09.09.2024
(51) Int. Cl.: G01C 21/30

(54) **METHODS AND SYSTEMS FOR ALIGNING VEHICLE TRACES**

(71) Applicant: TomTom Global Content B.V., 1011 AC Amsterdam (NL)
(72) Inventor: LANGNER, Tobias, 1011 AC Amsterdam (NL); IHLEFELD, Sebastian Thomas, 1011 AC Amsterdam (NL); KAISER, Stefan, 1011 AC Amsterdam (NL); MANN, Sergej, 1011 AC Amsterdam (NL)
(74) Representative: Meier, Florian

(57) **Abstract**

A method of aligning one or more vehicle traces for one or more vehicles traversing a geographical area, the method comprising: obtaining an initial alignment context for the geographical area, wherein the initial alignment context comprises a plurality of observed positions of road features; obtaining one or more vehicle traces for the one or more vehicles, each vehicle trace defining a path travelled by the respective vehicle across the geographical area, and comprising one or more observations of respective road features observed relative to the respective path; selecting from the alignment context, for each of the vehicle traces, a respective set of observed positions corresponding to observations in said vehicle trace; and adjusting each vehicle trace based on discrepancies between the observations of the trace and the corresponding observed positions in the selected set of observed positions, to align each vehicle trace to the alignment context.

## Description

### Field of the invention

The present invention relates to methods and systems for aligning one or more vehicle traces. In particular, methods and systems for aligning one or more vehicle traces for one or more vehicles traversing a geographical area, to thereby improve the spatial accuracy of the vehicle traces.

### Background of the invention

Modern vehicles typically collect information to enable tracking of locations of said vehicles in relation to a geographical area (e.g. to identify positions of the vehicles on a map of the geographical area). This tracking information can be collected over time to enable determination of vehicle trajectories of the vehicles.

For example, vehicles have long been fitted with global navigation satellite system (GNSS) trackers, commonly in the form of global positioning system (GPS) trackers, which determine the location of the tracker (and hence the vehicle it is fitted to) using time signals transmitted from satellites. Such (well-known) satellite navigation is described further at https://en.wikipedia.org/w/index.php?title=Satellite navigation&oldid=1225291126, the entire contents of which are incorporated herein by reference.

More recently, there has been rapid growth in the development of automated (or autonomous) driving (AD) systems for driver assistance. To enable the implementation of such AD systems, vehicles are fitted with additional sensors.

Often, these additional sensors include sensors for determining (local) motion of a (autonomous) vehicle relative to a starting location. To measure (or determine) this local motion, the vehicle may be fitted with an odometry sensor, as described at https://computersciencewiki.org/index.php?title=Odometry sensor&oldid=12131, the entire contents of which are incorporated herein by reference.

Other common additional sensors include sensors for object detection (and identification) such as proximity sensors and/or cameras. Using the additional location information provided by detecting objects around a vehicle and identifying those detected objects on a map of the geographical area, the (autonomous) vehicle is able to more accurately localise itself in relation to the map than with GNSS trackers alone.

Such localisation can also be performed in the absence of a predetermined, (provided) map of the geographical area. For example, it is known to use simultaneous localisation and mapping (SLAM) to build up a map of the area surrounding the vehicle from vehicle sensor data (including object detection data and odometry data), and then to localise the vehicle in relation to the built-up map using the vehicle sensor data. SLAM for autonomous vehicles is described further at B Cao et al, LiDAR-Based Object-Level SLAM for Autonomous Vehicles, 2021 IEEE/RSJ International Conference on Intelligent Robots and Systems (IROS), DOl: 10.1109/IROS51168.2021.9636299, which can be accessed from https://ieeexplore.ieee.org/document/9636299 and which is incorporated herein by reference in its entirety.

For advances in AD systems, and fully autonomous vehicles (e.g. self-driving cars), it is important to enable said vehicles to determine their location relative to the environment they are travelling through with very high accuracy. Furthermore, it is important for many AD (as well as for applications in autonomous driving) for the location of objects in the vicinity of a vehicle to be known with a high degree of accuracy - whether for localization or other reasons.

The location of real-world objects observable from roads can advantageously be determined from so-called "sensor-derived observations" collected by vehicles such as those described above. However, since these observations come from a vehicle, their position can only be determined with limited accuracy, due in part to uncertainty about the position of the observing vehicle.

The present known approaches for tracking the location of a vehicle often lack the desired level of localisation accuracy. This is because each measurement used in the location tracking is associated with some degree of error.

For example, GNSS measurements are subject to GNSS errors as described at https://en.wikipedia.org/w/index.php?title= Error analysis for the Global Positioning Syst em&oldid=1222480314, the entire contents of which are incorporated herein by reference.

The inertial measurements by the odometry sensor(s), on the other hand, are relatively accurate in measuring a relative movement between subsequent locations, but can experience drift over time due to accumulated error.

Additionally, object detection and identification is associated with errors such as incorrect determination of a distance between a vehicle and an object, and incorrect object classification (or identification). These errors are often camera errors and may, for example, be triggered by poor visibility conditions (e.g. fog, rain, occlusion, dirt), inaccurate calibration, or prediction model errors.

Other common sources of error affecting vehicle location tracking include algorithmic and model errors (e.g. bias and drift in vehicle odometry sensors), tracking system errors (e.g. internal system timing errors), and encoding errors (e.g. errors introduced when packing and compressing measured data, such as when converting a float to 6bit with scaling and offset).

Since a determination of a vehicle location (or position) is typically based on multiple different data inputs from multiple different sensors in combination, multiple different sources of error are introduced. This combination of errors can significantly reduce the accuracy of the determined (or calculated) vehicle location. This, in turn, can lead to errors in any information which is at least partially derived from vehicle location, such as for instance also in the interpretation of sensor-derived observations.

In addition, it may be desired to determine relative locations of two (or more) different vehicles in the geographical area. However, on account of compound errors in each determined vehicle location, the accuracy of these relative locations may also be reduced.

Therefore, it is desired to provide improved methods and systems for accurately determining the location (or position) of one or more vehicles (and observed objects) in relation to a geographical area.

### Summary of the invention

It is an aim of this invention to provide improved systems and methods for aligning one or more vehicle traces for one or more vehicles traversing a geographical area, to thereby improve the spatial accuracy of the vehicle traces.

For example, there is provided a method for aligning a vehicle trace of a vehicle traversing a geographical area, the method comprising: obtaining the vehicle trace, the vehicle trace comprising a path travelled by the vehicle and one or more vehicle sensor observations of locations of features along the path, wherein the path is associated with a first error margin and each observed feature location is associated with a respective second error margin; obtaining an alignment context for the geographical area, the alignment context comprising identifications of locations of features of the geographical area, aligning the vehicle trace to the alignment context based on correspondence between alignment context feature locations and observed feature locations, the first error margin and the second error margins.

For example, there is provided a method comprising obtaining an alignment context data, wherein the alignment context comprises data indicative of (a determined type and) a determined position of road objects in a geographic area; obtaining vehicle trace data, wherein the vehicle trace data comprises data indicative of determined positions of a respective vehicle along a respective path at least partially within the geographic area and data indicative of (a determined type and) a determined position of observed road objects, observed by the respective vehicle along the respective path; selecting, for each of at least a subset of the observed road objects, a respective subset of the road objects from the alignment context data (based on a spatial proximity to the respective one of the at least a subset of the observed road objects (and the determined type of the respective one of the at least a subset of the observed road objects)); and modifying the vehicle trace data, based on a metric dependent on respective distances between the determined positions of each of the at least a subset of the observed road objects and the respective subset of the road objects from the alignment context data.

In a first aspect of the invention, there is provided a method of aligning one or more vehicle traces (or trajectories or tracks) for (or collected by) one or more vehicles traversing (or travelling in, across or through) a geographical area, the method comprising: obtaining an initial alignment context for the geographical area, wherein the initial alignment context comprises a plurality of observed positions of road (or environment or stationary) features; obtaining one or more vehicle traces for the one or more vehicles, each vehicle trace defining a path travelled by the respective vehicle across the geographical area, and comprising one or more observations of respective road (or environment) features observed relative to the respective path; selecting from the alignment context, for each of the vehicle traces, a respective set of observed positions corresponding to observations in said vehicle trace; and adjusting (or optimizing) each vehicle trace based on discrepancies (or differences, or comparison ) between the observations of the trace and the corresponding observed positions in the selected set of observed positions, to align each vehicle trace to the alignment context.

In some embodiments, the method further comprises updating the alignment context based on the observations of the vehicle traces; and aligning one or more subsequent vehicle traces to the updated alignment context. It will be appreciated that in this way a large number of vehicle traces may in effect be aligned to each other. Thus, the accuracy of each of the vehicle traces may be improved through a mutual cancellation of errors. By aligning a large number of vehicle traces using the alignment context a direct joint optimization problem involving all of the vehicle traces, which may be computationally infeasible for a large number of traces, may be avoided.

In some embodiments, the updating the alignment context comprises generating one or more new observed positions (in the alignment context) corresponding to one or more of the observations.

In some embodiments, the one or more of the observations are observations of the obtained vehicle traces. In other embodiments, the one or more of the observations are observations of the adjusted vehicle traces.

In some embodiments, the updating the alignment context further comprises determining whether a number of observed positions (in the alignment context) for a subregion of the geographical area exceeds a pre-determined number and, if the pre-determined number is exceeded, selectively removing one or more of the observed positions for the subregion.

In some embodiments, the selective removing is performed using (based on) timestamps of the observed positions for the subregion.

In some embodiments, the updating the alignment context comprises selectively removing observations from the alignment context based on respective ages of said observations (observation age, time stamp).

In some embodiments, the method further comprises obtaining, for each vehicle trace, a respective vehicle trace graph; wherein each vehicle trace graph comprises a respective set of vehicle positions connected by respective constraints and a respective set of observation nodes; wherein, for each vehicle trace graph, the respective set of vehicle positions and the respective constraints define the path travelled by the respective vehicle; wherein each observation node corresponds to a respective observation of the respective vehicle trace and is linked to a corresponding position node of the respective vehicle trace graph by a position constraint; and wherein the adjusting (optimizing) each vehicle trace comprises adjusting (or optimising) each vehicle trace graph by constraining the positions of the observation nodes relative to the corresponding observed positions in the selected set of observed positions.

In some embodiments, the one or more vehicle traces are generated using sensor fusion, (wherein the sensor fusion is performed based on sensor data from vehicle odometry sensors and global navigation satellite system (GNSS) sensors.)

In some embodiments, one or more of the observed positions correspond to road (environment) features outside of the geographical area and from a second area adjacent to the geographical area.

In some embodiments, one or more of the observed positions are ground control points.

In some embodiments, for each of the vehicle traces, the selecting from the alignment context the respective set of observed positions comprises selecting the respective set of observed positions based on spatial proximity (nearest neighbour lookup).

In some embodiments, for each of the vehicle traces, the selecting from the alignment context the respective set of observed positions comprises: identifying one or more feature matches between the road features for the observed positions and the road features for the respective observations; and including observed positions in the respective set for which there is a feature match.

In some embodiments, at least one of: a respective relationship between each of the one or more observations and the respective path is defined as a soft constraint; and a configuration of each respective path is defined by one or more soft constraints.

In some embodiments, the adjusting each vehicle trace is further based on a positional uncertainty (noise modelling) of at least one of: a) the observations of the respective trace; and b) the path of the respective trace.

In some embodiments, each road feature comprises one or more of: a road sign; a streetlamp; and a road marking.

In some embodiments, the method further comprises generating or updating, based on the adjusted vehicle traces, at least one of map and traffic data.

In some embodiments, the method further comprises providing the at least one of map and traffic data to at least one of a driver assistance system, an autonomous driving system, and a navigation system.

In some embodiments, the method further comprises executing, based on the map or traffic data, a control function of at least one of a driver assistance system, an autonomous driving system, and a navigation system.

In some embodiments, the alignment context is stored as a spatial hash table.

In a second aspect of the invention, there is provided a system comprising one or more processors configured to perform the method of the first aspect or any embodiment thereof.

In a third aspect of the invention, there is provided a computer program comprising instructions which, when executed by one or more processors, cause the one or more processors to carry out the method of the first aspect of any embodiment thereof.

In a fourth aspect of the invention, there is provided a computer readable medium storing the computer program of the third aspect.

### Brief description of the drawings

Embodiments of the invention will now be described, by way of example only, with reference to the accompanying drawings, in which:
Figure 1 schematically illustrates an example scenario in which vehicle traces of a plurality of vehicles traversing a geographical area are aligned with respect to each other.
Figure 2 schematically illustrates an example scenario in which a vehicle trace of a vehicle traversing a geographical area is aligned to the geographical area.
Figure 3 schematically illustrates a method of aligning one or more vehicle traces for one or more vehicles traversing a geographical area.
Figure 4 schematically illustrates an example of a vehicle trace, represented as a vehicle trace graph.
Figure 5 schematically illustrates an example of a system for aligning one or more vehicle traces for one or more vehicles traversing a geographical area.
Figure 6 schematically illustrates an example of a computer system which may be used in the invention.

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

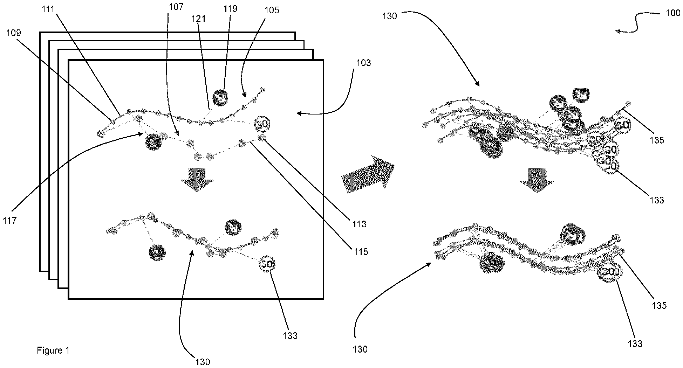

**Figure 1** illustrates an example scenario 100 in which vehicle traces of a plurality of vehicles traversing a geographical area are aligned, to thereby improve the spatial accuracy of the vehicle traces. This scenario 100 illustrates how data obtained from each vehicle can be used to increase the accuracy of data obtained from other vehicles that have traversed (or are traversing) the same geographical area (e.g. cars driving down the same road).

In scenario 100, vehicle data 103 is (first) obtained for each of a plurality of vehicles, each of the plurality of vehicles having traversed the geographical area. For each vehicle, the vehicle data 103 comprises odometry data 105, satellite position data (i.e. GNSS data) 107, and observation data 117.

For each vehicle, the odometry data 105 comprises (or is) a plurality of first estimated vehicle positions (or vehicle poses - a pose differs from a position because it represents a position and also an orientation, as is well understood from the art) 109 connected by first motion factors 111. The first motion factors 111 represent (or are) the estimated relationships (or linkages or paths) between consecutive first estimated vehicle positions 109. Each first estimated vehicle position 109 is associated with an estimated time of the vehicle being in that position (or time stamp), and consecutive first estimated vehicle positions 109 may be determined from this timing information. Each first estimated position 109 is a relative position, and provides an indication of the location (or position or pose) of the vehicle at the respective estimated position time relative to an initial (earliest in time) first estimated position 109 (which may be set to the origin or 'zero'). In this way, the odometry data 105 represents a trajectory of the vehicle. The trajectory of the vehicle being a local motion path (or track) from the initial (earliest in time) first estimated vehicle position 109 to the final (latest in time) first estimated vehicle position 109. The trajectory illustrates the shape of the path taken by the vehicle and the displacement (or distance travelled) of the vehicle between the initial and final first estimated vehicle positions 109.

This odometry data 105 may, for example, be obtained from cameras on the vehicle (e.g. ego-motion data) and/or other odometry sensors such as wheel encoders and inertial measurement unit sensors (that, for example, measure acceleration and angular velocity). Odometry and ego-motion for vehicle position estimation is well known in the art, and as such will not be described further herein.

For each vehicle, the satellite position data 107 comprises a plurality of second estimated vehicle positions 113 connected by second motion factors 115. The second motion factors 115 represent (or are) the estimated relationships (or linkages or trajectories or paths) between consecutive second estimated vehicle positions 113. Each second estimated vehicle position 113 is associated with an estimated time of the vehicle being in that position (or time stamp), and consecutive second estimated vehicle positions 113 may be determined from this timing information. The estimated times for the second estimated vehicle positions 113 may be the same as or different than the estimated times for the first estimated vehicle positions 109.

For each vehicle, the second estimated vehicle positions 113 are satellite positions, and therefore represent a location (or position) relative to Earth. For example, each second estimated vehicle position may be represented in Earth-Centred Earth-Fixed cartesian coordinates (ECEF).

In addition, because the second estimated vehicle positions 113 have timing information, and a consecutive order of second estimated vehicle positions 113 can be determined, the second estimated vehicle positions 113 also represent a trajectory of the vehicle. The trajectory of the vehicle being a local motion path (or track) from the initial (earliest in time) second estimated vehicle position 113 to the final (latest in time) second estimated position 113. The trajectory illustrates the shape of the path taken by the vehicle and the displacement (or distance travelled) of the vehicle between the initial and final second estimated vehicle positions 113.

This satellite position data 107 for a vehicle may, for example, be obtained from satellite positioning sensors on the vehicle. The satellite position data (i.e. GNSS) data may be GPS data from a GPS sensor on the vehicle. Satellite position estimation for vehicles is well known in the art, and as such will not be described further herein.

For each vehicle, the observation data 117 comprises data indicating the position (or pose) of one or more road (or environment) features in the geographical area. The road (or environment) features may, for example, be or comprise: detected signs such as traffic signs , reflectors, road-markings, and street lights. The road (or environment) features are typically stationary (or non-moving or fixed) features. A traffic sign is a camera-detectable object which conveys information, a warning, or an instruction to road users.

For each vehicle, the observation data 117 may be obtained (or derived) from sensors on the vehicle, such as cameras. Detection of features (or objects) from data of sensors such as cameras is well-known in the art and will not be described further herein. For each detected feature, the observation data 117 may comprise an associated identification (e.g. classification) 119 of the detected feature (or object). Identification (e.g. classification) of features (or objects) detected from sensor data is also well-known in the art and will not be described further herein.

For each vehicle, the data indicating the position (or pose) of each detected feature may comprise (or be) data indicating a position of the feature relative to the vehicle. For example, the data indicating the position of the feature relative to the vehicle may comprise a distance or a displacement 121 between the vehicle and the detected feature.

The observation data 117 may be in the form of (or comprise or be arranged as) a set of observations, each observation indicating (or being) the position of a (respective) road (or environment) feature (as) observed (or determined or identified) at a first estimated vehicle position 109 or a second estimated vehicle position 113 (as well as optionally a respective identification (e.g. classification) 119 of the detected feature). In this way, the (observed) position of the road feature (relative to the vehicle that observed it) is linked to (or associated with) an estimated vehicle position. It will be appreciated that, in some cases, for a given vehicle, the observation data 117 may comprise a plurality of observations of the same feature. For example, this may occur where the sensors on the vehicle (e.g. cameras) detect the same feature at different estimated vehicle positions 109, 113. In this way, the same vehicle may provide multiple observations (in the observation data 117) of the same road (or environment) feature (or object). It will be appreciated that, on account of errors in the observation data 117, the same vehicle may provide multiple observations of the same (stationary) road (or environment) feature (or object) and these multiple observations may map to different positions for that same feature (or object), even though in reality, the road feature has not moved.

In scenario 100, for each of the plurality of vehicles, a vehicle trace 130 is generated by performing sensor fusion on (or with or using) the respective vehicle data 103 for that vehicle. A vehicle trace is a data representation of: a) a trajectory of a vehicle; b) a global (i.e. GNSS) positioning of the trajectory of the vehicle); and c) a set of observations, each observation indicating (or being) a position of a (respective) road (or environment) feature relative to a point on the trajectory of the vehicle.

Sensor fusion is a process used to combine multiple sources of measurement data of (or for or associated with) the same property or feature to thereby generate more accurate measurement data for that property or feature. Sensor fusion is described at: a) S Alaba. "GPS-IMU Sensor Fusion for Reliable Autonomous Vehicle Position Estimation", which can be accessed from https://arxiv.orq/html/2405.08119v1; b) S Thrun et. al "Probabilistic Robotics", which can be accessed from https://docs.ufpr.br/~danielsantos/ProbabilisticRobotics.pdf; and c) H. B. Mitchell, "Multi-Sensor Data Fusion" 2007, which can be accessed from https://link.springer.com/book/10.1007/978-3-540-71559-7, the entire contents of all of which are incorporated herein by reference.

In scenario 100, both the odometry data 105 and the satellite position data 107 represent a trajectory of a vehicle (e.g. motion of a vehicle relative to a start point). Thus, sensor fusion is performed to generate a more accurate vehicle trajectory.

It will be appreciated that, where the observation data 117 is in the form of observations indicating the positions of road (or environment) features observed (or determined or identified) at second estimated vehicle positions 113, sensor fusion is not required. This is because a direct combination of the satellite position data 107 and the observation data 117 (alone) provides a vehicle trace 130 since it defines a) a trajectory of a vehicle; b) a global (i.e. GNSS) positioning of the trajectory of the vehicle); and c) a set of observations, each observation indicating (or being) a position of a (respective) road (or environment) feature relative to a point on the trajectory of the vehicle. However, sensor fusion may still be performed using odometry data 105 to improve the accuracy of the trace (provided by the satellite position data 107 and the observation data 117).

In one example, the sensor fusion of the odometry data 105 and the satellite position data 107 for a given vehicle may comprise: determining a plurality of time points (each time point representing a time after the vehicle began moving), generating (or estimating) for each of the time points a corresponding third vehicle position based on the odometry data 105 (the respective third vehicle position being an estimate from the odometry data 105 of the vehicle position as the respective time point relative to the estimated vehicle position (from the odometry data 105) at the earliest time point of the plurality of time points) and a corresponding fourth vehicle position from the satellite position data 107 (the respective fourth vehicle position being an estimate from the satellite position data 107 of the vehicle position as the respective time point relative to the estimated vehicle position (from the satellite position data 107) at the earliest time point of the plurality of time points); determining (or modelling or estimating) for each of the time points a noise (or error) variance for each of the corresponding third vehicle position and fourth vehicle position; and generating, for each of the time points, a fused vehicle position based on the third vehicle positions, the fourth vehicle positions, and the respective noise variances for the third and fourth vehicle positions. The noise variances represent the predicted (or expected or estimated) error in the measurements and may be determined based on the known potential sources of error (or noise) for those measurements. A more accurate sensor may be associated with a smaller noise variance. For a given vehicle, the noise variance for the odometry data 105 may be different than the noise variance for the satellite position data 107.

In some examples, the generating, for each of the time points, a fused vehicle position based on the third vehicle positions, the fourth vehicle positions, and the respective noise variances for the third and fourth vehicle positions may comprise performing inverse-variance weighting (e.g. aggregating the third vehicle and the fourth vehicle positions to minimise the variance of their weighted average). Inverse variance weighting is described at https://en.wikipedia.org/w/index.php?title=Inverse-variance weiahting&oldid=1223841432, the entire contents of which are incorporated herein by reference. It will be appreciated that other examples may employ other methods of sensor fusion such as methods based on Kalman filtering (as described at https://en.wikipedia.org/w/index.php?title=Kalman filter&oldid=1225592211, the entire contents of which are incorporated herein by reference) or particle filters (as described at https://en.wikipedia.org/w/index.php?title= Particle filter&oldid=1218031285 the entire contents of which are incorporated herein by reference).

For each vehicle, the fused vehicle positions together represent a sensor fusion trajectory 135 of the vehicle. The trajectory of the vehicle being a local motion path (or track) from the initial (earliest in time) fused vehicle position to the final (latest in time) fused vehicle position. That is, each sensor fusion trajectory 135 comprises (or is) a plurality of fused vehicle positions (or vehicle poses) connected by fused motion factors. The fused motion factors represent (or are) the relationships (or linkages or paths) between consecutive fused vehicle positions.

Each sensor fusion trajectory 135 is associated with coordinates relative to Earth (e.g. ECEF coordinates), (derived) from the satellite position data 107. For example, each fused position may be associated with an estimate, from the satellite position data 107, of the respective fourth vehicle position relative to Earth e.g. in ECEF coordinates.

Each sensor fusion trajectory 135 is associated with a set of sensor fusion observations 133. Each sensor fusion observation indicates (or is) the position of a (respective) road (or environment) feature relative to a point on the sensor fusion trajectory 135 as well as optionally a respective identification (e.g. classification) 119 of the detected feature. Each sensor fusion observation is determined based on the observation data 117. Each sensor fusion observation is a transformation of a respective observation of the observation data 117. Each sensor fusion trajectory 135 represents a first transformation from the trajectory of the odometry data 105 and a second transformation from the trajectory of the satellite position data 107. Since each observation indicates the position of a (respective) road (or environment) feature (as) observed (or determined or identified) at a first estimated vehicle position 109 (on the trajectory of the odometry data 105) or a second estimated vehicle position 113 (on the trajectory of the satellite position data 107), the trajectory transformations can be used to provide the sensor fusion observations 133.

Since each sensor fusion trajectory 135 is associated with coordinates relative to Earth (e.g. ECEF coordinates), and each sensor fusion observation indicates (or is) the position of a (respective) road (or environment) feature relative to a point on the sensor fusion trajectory 135, each trace 130 indicates a position of the road feature in coordinates relative to Earth (e.g. ECEF coordinates).

It will be appreciated that, while in general, timing data for the odometry data 105, satellite position data 107 and observation data 117 is used for sensor fusion, it is not required for sensor fusion. For example, instead, a respective consecutive order of first estimated vehicle positions 109 and second estimated vehicle positions 113 may be used. The initial first estimated vehicle position 109 and second estimated vehicle position 113 may be assumed to have a common start location (or position), and sensor fusion can be performed based on the subsequent relative trajectories from that position.

In scenario 100, the generated vehicle traces 130 (there being a vehicle trace 130 for each of the plurality of vehicles) are then combined. More specifically, the generated vehicle traces 130 are aligned by (or using) their coordinates relative to Earth (e.g. ECEF coordinates), from their respective satellite position data 107. As illustrated in figure 1, even with the sensor fusion correction, the traces 130 are still noisy. As a result, the same stationary feature (e.g. a 30 speed limit sign, a keep right sign, or a clearway sign) is detected in various different positions. That is, the indication of the position of a road feature in coordinates relative to Earth (e.g. ECEF coordinates) is associated with an error. On account of this error, the localisation of the road feature (e.g. identification of the coordinates relative to Earth) has lower than ideal precision or lower than ideal accuracy. High precision and high accuracy are both desired for AD systems.

In scenario 100, the traces 130 are then (re)aligned using the sensor fusion observations 133. For example, this realigning comprises assigning a noise variance to: a) each sensor fusion trajectory 135; b) the coordinates relative to Earth for each sensor fusion trajectory 135; and c) the position of each sensor fusion observation in coordinates relative to Earth (e.g. ECEF coordinates) (as well as optionally the identification or classification associated with each sensor fusion observation). The realigning further comprises performing an optimization based on the sensor traces 130 and the assigned noise variances. One such suitable optimization is maximum a-posteriori inference (to find the mode of the a-posteriori distribution) as described at https://www.probabilitycourse.com/chapter9/9 1 2 MAP estimation.php, the entire contents of which are incorporated herein by reference.

The noise variances may be empirically/statistically determined or derived from (or given by) the odometry data 105, satellite position data (i.e. GNSS data) 107, and observation data 117.

As illustrated in figure 1, the additional introducing of the sensor fusion observations 133 when determining the positions (or locations) of the trajectories and observations (i.e. the realignment) increases the accuracy and precision of these positions. For example, ((re)aligned sensor fusion) observations of the same feature are clustered more closely together, and the ((re)aligned sensor fusion) trajectories are more closely aligned, with enough precision to illustrate the position (or location or coordinates relative to Earth) of lanes on a road. That is, lane-level precision can be obtained rather than mere road-level precision.

However, scenario 100 (and particularly the realigning) is only suitable where the number of traces 130 to be aligned is low. This is because the optimization problem of aligning traces 130 based on a) each sensor fusion trajectory 135; b) the coordinates relative to Earth for each sensor fusion trajectory 135; c) the position of each sensor fusion observation in coordinates relative to Earth (e.g. ECEF coordinates) (as well as optionally the identification or classification associated with each sensor fusion observation); and d) noise variances in each of a)-c), becomes very large very quickly, especially given all of a)-d) depend on each other. This could quickly hit memory and runtime limits for the machine performing the optimization.

Nonetheless, hundreds of traces 130 may be required to achieve the desired precision and accuracy for AD systems. Thus, the solution may become intractable.

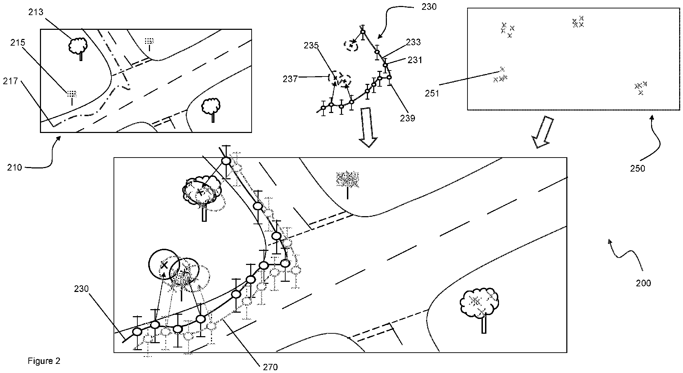

**Figure 2** illustrates an example scenario 200 in which a vehicle trace 230 of a vehicle traversing (or travelling in, across or through) a geographical area 210 is aligned, to thereby improve the spatial accuracy of the vehicle trace 230. When the process illustrated by scenario 200 is repeated for different vehicle traces (of different vehicles) such that said process is performed (sequentially) on a plurality of vehicle traces 230, the implementation of scenario 200 is more computationally efficient than scenario 100 for that plurality of vehicle traces. Thus, scenario 200 illustrates a process more suitable for use in AD systems, or where there are a large number of traces to be aligned, than that of scenario 100 since it is more computationally efficient. It will be appreciated that this scenario could be applied in in-vehicle, live, applications as well as in offline applications based on historic data.

An aligned vehicle trace 270 generated in scenario 200 has a higher accuracy than the corresponding unaligned vehicle trace 230. The more accurate vehicle trace 270 (and the more accurate positions of stationary features observed) can be used, for example, to provide more accurate maps of the geographical area. The increase in accuracy advantageously allows for greater autonomy, since the increase in accuracy allows for more accurate (and hence safer) navigation and localisation by AD systems.

The geographical area 210 comprises a crossroads. The geographical area 210 also comprises a plurality of stationary (environment or road) features (or objects). In (or of) the plurality of stationary features, there are two trees 213 and two road signs 215. The true vehicle path 217 of the vehicle which generated the trace 230 (e.g. the vehicle whose sensors provided the data for the trace 230) is illustrated as dash-dot lines on the geographical area 210. The vehicle is a road vehicle, such as a car.

In scenario 200, a vehicle trace 230 is (first) obtained. The vehicle trace 230 defines a) a trajectory of the vehicle; b) a positioning of the trajectory of the vehicle relative to Earth (e.g. a GNSS position) ; and c) a set of observations, each observation indicating (or being) a position of a (respective) stationary (e.g. road or environment) feature relative to a point on the trajectory of the vehicle. The vehicle trace may be vehicle trace 130 and may be obtained via sensor fusion. Optionally, the vehicle trace 230 may be generated in scenario 200, and the generating the vehicle trace 230 may comprise receiving: observation data 117; and vehicle odometry data 105; and/or vehicle satellite position data 107, and performing sensor fusion.

The vehicle trace 230 defines a trajectory of the vehicle which is positioned at least partially within the geographical area 210.

The vehicle trace 230 comprises eleven estimated vehicle positions (or vehicle poses) 231 connected by motion factors 233. The motion factors 233 represent (or are) the estimated relationships (or linkages or paths or relative constraints) between consecutive estimated vehicle positions 231. For example, a motion factor may represent (or comprise) a speed and heading connecting consecutive estimated vehicle positions 231 or a representation of the path between consecutive estimated vehicle positions 231. Each estimated vehicle position 231 is associated with an estimated time of the vehicle being in that position (or time stamp), and consecutive estimated vehicle positions 231 are determined from this timing information.

Each estimated position 231 indicates a position (or location) in coordinates relative to Earth (e.g. ECEF coordinates). The estimated vehicle positions 231 also represent a trajectory of the vehicle. The trajectory of the vehicle being a local motion path (or track) from the initial (e.g. earliest in time) first estimated vehicle position 231 to the final (e.g. latest in time) estimated vehicle position 231.

Each estimated position 231 may be associated with an estimate of the position error 239. This is illustrated by error bars 239 defining bounds (or a region) on the estimated position 231. The bounds 239 (and therefore the configuration of the error bars) may be determined such that the probability of the true position of the vehicle at the time of the respective estimated position 231 falling within the bounds 239 is a predetermined value. For example, the bounds 239 (and its shape as defined by the error bar) may define a subarea of the geographical area 210 in which there is a 95% probability that the vehicle was located at the time of (or associated with) the respective estimated position 231.

The bounds 239 for different estimated positions 231 of a trace 230 may be different shapes and/or sizes. This may reflect differences in the estimated accuracy (or the precision) of the data used to generate the vehicle trace 230.

The vehicle trace 230 further comprises a plurality of observations 235. Specifically, the vehicle trace 230 comprises three observations 235. That is, not every estimated vehicle position 231 is (or need be) associated with an observation 235. Each of the observations 235 is associated with a different estimated vehicle position 231.

Each of the observations 235 indicates the position of a stationary feature in the geographical area. Specifically, each observation comprises an estimated distance between an estimated vehicle position 321 and the stationary feature, as well as a direction of the stationary feature from the estimated vehicle position 321.

For each vehicle, the observations 235 may be obtained (or derived) from sensors on the vehicle, such as cameras.

For two of the observations 235 the stationary feature is a road sign 215, for the other one of the observations 235, the stationary feature is a tree.

Each observation may be associated with an estimate of the observation error 237. This is illustrated by a dashed line defining a region (or bounds) 237. The region 237 (and therefore the configuration of the dashed line) may be determined such that the probability of the true position of the detected feature falling within the region 237 is a predetermined value. For example, the region 237 (and its shape as defined by the dashed line) may define a subarea of the geographical area 210 in which there is a 95% probability that the detected feature is located.

The region 237 for different observations 235 of a trace 230 may be different shapes and/or sizes. This may reflect differences in the estimated accuracy (or the precision) of the data used to generate the vehicle trace 230. For example, the region 237 may be a circular region with the observation (position) 235 in the centre of the region 235.

There are many different ways in which the vehicle trace 230 may be stored or represented. For example, a vehicle trace 230 may be stored as a table with a row (or column) for each estimated vehicle position 231.

In scenario 200 an alignment context 250 is obtained.

The alignment context 250 represents the geographical area 210. The alignment context 250 comprises indications of positions of stationary features in the geographical area 210. In particular, the alignment context 250 comprises a plurality of indications, each indication comprising a (representation of a) location (or position) relative to Earth (e.g. a GNSS location) of a stationary feature of the geographical area. The indicated positions are observed positions. The observed positions 251 may be derived (at least in part) from other (i.e. not vehicle trace 230) vehicle traces (or more generally, vehicle data from other traverses of the geographical area, by the vehicle in question or by other vehicles). The alignment context 250 comprises a plurality of observed positions (or locations) of the same stationary (road or environment) feature. In alignment context 250, there are four observations of each of the trees 213 and each of the signs 215 respectively. It will be appreciated that there may be different numbers of observations for different stationary features.

In scenario 200, a respective set of observed positions 251 corresponding to observations 235 of said vehicle trace 230 are selected from the alignment context 250. Specifically, for each of the observations 235 of vehicle trace 230 a (sub)set of the observed positions 251 of the alignment context 250 is selected. The selection is performed based on proximity. That is, for each observation 235, the selection is of all observed positions 251 within a predetermined radius of the observation (position) 235. As such, the method may further comprise determining for each observation 235, a (sub)set of observed positions 251 located within a predetermined radius of the observation (position) 235. The determination may be made based on the (estimated or determined) positions relative to Earth (e.g. GNSS positions) of the observed positions 251 of the alignment context 250 and the respective observation (position) 235 of the vehicle trace 230. For some observations 235, there may be no observed positions 251 within the predetermined radius 251. In such a case, no observed positions 251 are selected for those observations 235.

In scenario 200, the vehicle trace 230 is then adjusted subject to constraining the positions of the observations 235 relative to the corresponding observed positions 251 in the selected set of observed positions 251, to thereby align each vehicle trace 230 to the alignment context 250. The adjusting (to align) may be (and is generally) more than a simple translation of the position relative to Earth of the vehicle trace 230. In particular, the adjusting may comprise: adjusting one or more of the estimated vehicle positions 321 relative to estimated vehicle positions 321 of the trace 230 (and thereby changing the shape of the trajectory of the vehicle); and/or adjusting the positions of one or more the observations 235 relative to the respective corresponding estimated vehicle position 321; and/or translation of the position relative to Earth of the vehicle trace 230. That is, adjusting the vehicle trace 230 is performed to optimize the alignment of the vehicle trace 230 to the alignment context 250. More specifically, the variables to optimize for the vehicle trace 230 are the estimated vehicle positions (or poses) 321 and observation (positions) 235.

The optimization is modelled using graphs, specifically Bayesian Factor Graphs as described at https://en.wikipedia.org/w/index.php?title=Factor graph&oldid=1179796669, the entire contents of which are incorporated herein by reference. The Bayesian Factor Graphs are used to capture and represent the vehicle trace 230 (and its internal relationships between the corresponding estimated vehicle positions 321 and observations 235).

The optimization is set up as a non-linear least squares optimization problem, which is solved by the Levenberg-Marquardt algorithm, as described at https://en.wikipedia.org/w/index.php?title=Levenberg%E2%80%93Marquardt algorithm&ol did=1220845787, the entire contents of which are incorporated herein by reference. The solution to the optimization is adjusted estimated vehicle positions (or poses) and adjusted observation (positions). The adjusted estimated vehicle positions (or poses) and adjusted observation (positions) are solved for jointly.

The adjusting the vehicle trace 230 may comprise generating the adjusted vehicle trace 270.

The adjusted vehicle trace 270 is more accurate than the input vehicle trace 230.

The skilled person would appreciate variations of scenario 200.

For example, the skilled person would appreciate that the geographical area 210 need not comprise a crossroads and any other geographical area would be suitable. For example, the geographical area may comprise different road or street configurations, or may comprise no road at all. The geographical area 210 may be a subregion of the world such as, for example, a city or a country. Thus, in scenario 200 the world is tiled into regions (geographical areas) with their own local alignment contexts 250. In this way, different regions can be easily assigned to different workers (parallelization on a tile level). This makes it easy to scale the alignment process horizontally, as additional machines/workers can be added as needed.

There may be any number of estimated vehicle positions 231 in the vehicle trace 230. The estimated vehicle positions 231 may be estimated vehicle poses.

It is not essential that each estimated vehicle position 231 is associated with a time of the vehicle being in that position. The skilled person would appreciate that there are many other ways that consecutive estimated vehicle positions 231 may be determined. For example, each estimated vehicle position may be associated with a vehicle position index, and the consecutive estimated vehicle positions 231 may be represented as consecutive associated indexes.

The estimate of the position error 239 need not be represented as error bars or define bounds or a region. The estimate of the position error may instead, for example, be represented as a noise variance. Where the position error 239 does define bounds, these need not be based on a probability that the true position of the vehicle lies within the bounds. Instead, for example, the bounds could represent predefined distances from the estimated vehicle position 231 based on the precision of the sensor(s) used to provide the estimated vehicle position 231.

The vehicle trace 230 may comprise any number of observations 235. While not every estimated vehicle position 231 need be associated with an observation 235, in some embodiments, there is at least one observation associated with each estimated vehicle position 231. At least some estimated vehicle positions may be associated with any number of observations 235. In some cases, observations 235 may be associated with more than one vehicle position 231.

The skilled person would appreciate that observations 235 need not be associated with an estimated distance between an estimated vehicle position 321 and a stationary feature, as well as a direction of the stationary feature from the estimated vehicle position. Instead, for example, observations 235 may be associated with an estimated distance between an estimated vehicle position 321 and a stationary feature alone. In this case, the observation (position) 235 may not comprise a single point estimate of position but instead an arc on which it is estimated that the stationary feature is located.

The indication of the position of the stationary feature may be an indication of the pose of a stationary feature.

The estimate of the observation error 237 need not be represented as a region. The estimate of the observation error 237 may instead, for example, be represented as a noise variance. Where the observation error 237 does define a region, these need not be based on a probability that the true position of the detected feature lies within the region. Instead, for example, the region could represent predefined distances from the estimated observation (position) 235 based on the precision of the sensor(s) used to provide the observation 235. The region need not be circular or uniform, and may be any shape or size. The observation (position) 235 need not be at the centre of the region.

The alignment context 250 may comprise any number of stationary features, and any number of observed positions 251. The stationary features may be features of any type and are not limited to signs and trees. The positions 251 need not be observed positions, and may, for example, be simulated or generated based on maps of the geographical area 210.

The alignment context may comprise (or consist of or have) a single identification of any given stationary feature. Moreover, there may be stationary features in geographical area 210 for which there are no indication in the alignment context.

The skilled person would appreciate that the selecting from the alignment context 250, a respective set of observed positions 251 corresponding to observations 235 of said vehicle trace 230 may be performed in many different ways.

For example, it is not essential that for each of the observations 235 of vehicle trace 230, a (sub)set of the observed positions 251 of the alignment context 250 is selected. Instead, all of the observed positions 251 of the alignment context may be selected (without associated to a specific observation 235). In such a case, for the adjusting, different weights may be assigned to different observed positions 251 such that less relevant observed positions 251 do not skew the alignment. For example, for each observation (position) 235, each observed position 251 may be assigned a weight, with the weight decreasing with increasing distance from the observation (position) 235. In this way, the contribution to the adjusting of likely less relevant observed positions 251 is reduced.

Moreover, where the selecting from the alignment context 250, a respective set of observed positions 251 corresponding to observations 235 of said vehicle trace 230 comprises selecting for each of the observations 235 of vehicle trace 230 a (sub)set of the observed positions 251 of the alignment context 250, this may be performed in many different ways.

For example, for each of the observations 235 of vehicle trace 230 a (sub)set of the K nearest neighbour observed positions 251 of the alignment context 250 may be selected, where K is any positive integer (less than or equal to the total number of observed positions 251 of the alignment context 250). The value of K may be, for example, predetermined or set via user input. The value of K may differ for different observations 235.

In another example, for each of the observations 235 of vehicle trace 230 a (sub)set of observed positions 251 of the alignment context 250 may be selected based (at least in part) on an identification of that observation 235 and the observed positions 251. Specifically, for each detected feature, the corresponding observation 235 may (additionally) comprise an associated identification (e.g. classification) of the detected feature (or object).

The identification of the detected feature may be a class label such as 'tree' or 'sign'. The identification may indicate a class label when the probability that the detected feature is of that class exceeds a threshold. The identification may comprise an indication of the probability that a detected feature is of a particular class (e.g. its assigned class label). The identification may be based on data from vehicle sensors e.g. cameras.

The alignment context 250 may further comprise, for each indicated (observed) position 251 of a stationary feature, a respective indication of the class of the stationary feature. The class is either "tree" or "path". The class indications may be derived (at least in part) from other (i.e. not vehicle trace 230) vehicle traces (or more generally, vehicle data from other traverses of the geographical area, by the vehicle in question or by other vehicles).

For each of the observations 235 of vehicle trace 230 the selected (sub)set of observed positions 251 of the alignment context 250 may comprise (or consist of) all observed positions 251 having the same class label as the observation 235.

Additionally or alternatively, each of the observations 235 of vehicle trace 230 the selected (sub)set of observed positions 251 of the alignment context 250 may comprise (or consist of) all observed positions 251 having a similar class label to the observation 235. Groups of similar class labels may be, for example, predetermined or based on user input.

The skilled person would appreciate that selection based on identification may be combined with selection based on other criteria such as proximity.

For example, for each of the observations 235 of vehicle trace 230 the selected (sub)set of observed positions 251 of the alignment context 250 may comprise (or consist of) a subset of the observed positions 251 having the same class label as the observation 235, the subset of the of the observed positions 251 having the same class label as the observation 235 being all observed positions 251 having the same class label as the observation 235 within a predetermined radius of the observation (position) 235.

For example, for each of the observations 235 of vehicle trace 230 the selected (sub)set of observed positions 251 of the alignment context 250 may comprise (or consist of) a subset of the observed positions 251 having the same class label as the observation 235, the subset of the of the observed positions 251 having the same class label as the observation 235 being the K nearest observed positions 251 having the same class label as the observation 235. Again, K is any integer (less than or equal to the total number of observed positions 251 of the alignment context 250).

For the adjustment, it is not necessary for the vehicle trace 230 to be modelled as a graph at all. The skilled person would appreciate that optimization may be performed on any data structure, and the adjustment may be modelled as a more general constraint satisfaction problem, as described at https://en.wikipedia.orq/w/index.php?title=Constraint satisfaction problem&oldid=1234660 290, the entire contents of which are incorporated herein by reference.

It will be appreciated that where, for example, the vehicle trace 230 is stored as a table, the constraints on the optimization may be stored within the table or may be stored separately from the table. Moreover, these constraints may be predefined e.g. a predefined (or given) position error 239 and/or observation error 237 may be assumed for each estimated vehicle position 231 and estimated observation (position) 235 respectively.

In general, the problem to be solved here is sparse. Variables may be only connected to a few others, i.e. one estimated vehicle position 321 to the next, an observation 235 to one estimated vehicle position 321, etc. A graph is a computational efficient representation since there are only edges between related variables. Nonetheless, it will be appreciated that the vehicle trace 230 could be modelled with a tabular representation, i.e. a large matrix with lots of zeros (sparse matrix).

Moreover, where the vehicle trace 230 is modelled as a graph, that graph need not be a Bayesian Factor graph, any constraint graph may be suitable. Moreover, the Levenberg-Marquardt algorithm is an example of a suitable solution algorithm but is by no means the only such suitable solution algorithm, other estimation algorithms or filters may be used instead. For example, other sparse matrix solvers would be suitable, as described at L Polok "Accelerated sparse matrix operations in nonlinear least squares solvers", which can be accessed from https://www.researchgate.net/profile/Lukas-Polok-2/publication/316136980 Accelerated Sparse Matrix Operations in Nonlinear Least Sq uares Solvers/links/58f1cd1d458515ff23ab5a63/Accelerated-Sparse-Matrix-Operations-in-Nonlinear-Least-Squares-Solvers.pdf, and which is incorporated herein by reference in its entirety.

Other suitable algorithms include Extended Kalman Filter SLAM, Bundle Adjustment, and Particle Filter SLAM (FastSLAM) as described at F Dellaert et al. "Factor Graphs for Robot Perception", which can be accessed from https://www.cs.cmu.edu/~kaess/pub/Dellaert17fnt.pdf, and which is incorporated herein by reference in its entirety.

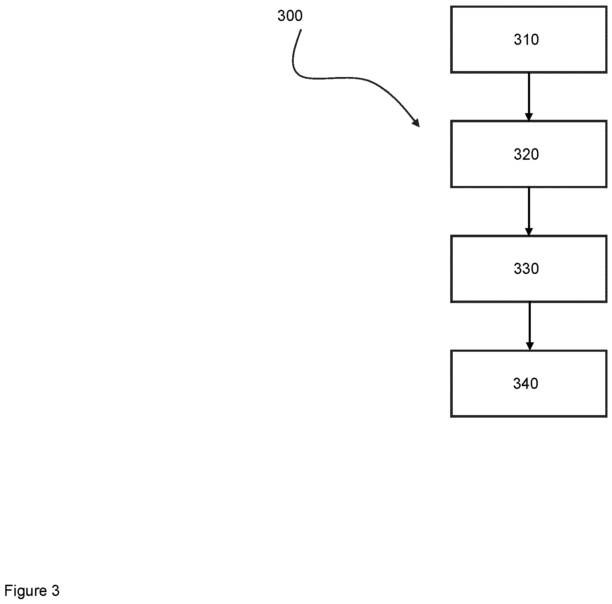

A more general illustration of the process implemented in scenario 200 is provided by method 300 (of figure 3)

**Figure 3** illustrates a method 300 of aligning one or more vehicle traces (or trajectories or tracks) for (or collected by) one or more vehicles traversing (or travelling in, across or through) a geographical area (to thereby improve the spatial accuracy of the vehicle traces).

In method 300, a first step 310 comprises obtaining an initial alignment context for the geographical area, wherein the initial alignment context comprises a plurality of observed positions of road (or environment or stationary) features.

The initial alignment context may be alignment context 250 and the plurality of observed positions may be observed positions 251.

Each observed position may comprise a position (or location) relative to (or within) the geographical area. Each observed position is an observed position of a road (or environment or stationary) feature. Each observed position may also be associated with (or comprise) an identification of a type of (or class of) the road (or environment or stationary) feature for that observed position.

Each road (or stationary or environment) feature may comprise one or more of: a road sign, a streetlamp, a road reflector and a road marking.

One or more of (or each of) the one or more observed positions may be associated with one or more confidence values (or scores). The higher the confidence value, the higher the confidence in the observed position. The lower the confidence value, the higher the error or noise. For a respective observed position, each confidence value may represent a confidence in the respective position (or location) relative to (or within) the geographical area. For a respective observed position, each confidence value may additionally or alternatively represent a confidence in (the identification of) the type of (or class of) the (associated) road feature.

One or more of the observed positions may be ground control points. Ground control points are points (or features) with relatively well-known coordinates relative to Earth. Ground control points may be associated with a significantly higher confidence value and/or accuracy than other observed positions . Ground control points may be (or represent) observations of road (or environment or stationary) features. Pole-like objects are particularly useful as ground control points as they are well-detected and because they tend to be more persistent in the real world than other road-features such as signs, reflectors, and paintings. In practice, signs are more often moved, removed or added than pole-like objects e.g. street-lights or trees. Additionally or alternatively, ground control points may be (or represent) observations of dummy features, artificially placed to be easily observed. Ground control points may be derived from (or extracted from) observations from highly accurate survey vehicles or third party surveys.

The initial alignment context may, for example, be obtained from memory, received, or generated. Generating the initial alignment context may comprise obtaining a plurality of previous observed positions of road (environment or stationary) features, each observed position being associated with a GNSS location (and optionally an identification (e.g. classification) of the feature), and collating the previous observed positions into the initial alignment context.

The initial alignment context may, for example, take the form of a map, or a table (with a row for each observed position), or a tree structure such as a Quadtree (as described at https://en.wikipedia.org/w/index.php?title=Quadtree&oldid=1226876349, the entire contents of which are incorporated herein by references) or a K-d-Tree (as described at https://www.baeldung.com/cs/k-d-trees#:~:text=What%20Are%20K%2DD%20Trees%3F,one%20of%20the%20K%20dimens ions, the entire contents of which are incorporated herein by reference). Other formulations for the alignment context would be readily appreciated by the skilled person.

For example, the alignment context may be stored as a (spatial) hash table. Hash tables implement associative arrays and are described at https://en.wikipedia.org/w/index.php?title=Hash table&oldid=1233747007, the entire contents of which are incorporated herein by reference.

The spatial hash table may be a hash grid implementation as described at Q Lv et. al "Multi-probe LSH: Efficient indexing for high-dimensional similarity search", which can be accessed from https://www.cs.princeton.edu/cass/papers/mplsh vldb07.pdf, and which is incorporated herein by reference in its entirety. The spatial hash table may use open addressing (as described at https://en.wikipedia.orq/w/index.php?title=Open addressing&oldid=1230487084, the entire contents of which are incorporated herein by reference) to avoid memory fragmentation.

In method 300, a second step 320 comprises obtaining one or more vehicle traces for the one or more vehicles, each vehicle trace defining a path travelled by the respective vehicle across the geographical area, and comprising one or more observations of respective road (or environment) features observed (relative to the respective path).

The one or more vehicle traces may be generated using sensor fusion, wherein the sensor fusion may be performed based on sensor data from vehicle odometry sensors and global navigation satellite system (GNSS) sensors. The sensor fusion may be as described in connection with figure 1.

Each vehicle trace may be a vehicle trace 230.

The geographical area may be geographical area 210.

The path travelled by each respective vehicle may represent a trajectory of that vehicle. The path travelled by each respective vehicle may be wholly contained within the geographical area or partially contained within the geographical area.

A configuration of each respective path may be defined by one or more soft constraints. The soft constraints may be probabilistic constraints. The soft constraints may encode both a data-model and noise associated with measurements. A configuration of each respective path may additionally or alternatively be defined by one or more hard constraints. Hard and soft constraints are well known in the art and will therefore not be described further herein.

For example, each vehicle trace may define a path because it comprises a plurality of (consecutive) estimated vehicle positions and respective relationships between those estimated vehicle positions. The shape of each vehicle trace path may be associated with a confidence value (or score). For example, each estimated vehicle position and respective relationship may be associated with a (respective) confidence value (or score). The higher the confidence value, the higher the confidence in the path (or estimated vehicle position or estimated relationship). The lower the confidence score, the higher the error or noise. The error or noise may be derived from errors or miscalibrations in the vehicle odometry sensors and/or GNSS sensors. These confidence values may take the place of (or implement) the bounds 239.

The one or more observations may (additionally) comprise an associated identification (e.g. classification) of the detected feature (or object). Each associated identification may be similarly associated with a confidence value (or score). Any error or noise in the identification may be, for example, due to a camera error, an algorithm error, or a human error.

The one or more observations may be observations 235.

A respective relationship between each of the one or more observations and the respective path may be defined as a soft constraint (or alternatively a hard constraint). The soft constraints may be probabilistic constraints. These constraints may take the place of (or implement) the bounds 237.

The method 300 may optionally comprise a further step of obtaining, for each vehicle trace, a respective vehicle trace graph; wherein each vehicle trace graph comprises a respective set of vehicle positions connected by respective constraints (or motion factors) and a respective set of observation nodes; wherein, for each vehicle trace graph, the respective set of vehicle positions and the respective constraints define the path travelled by the respective vehicle; wherein each observation node corresponds to a respective observation of the respective vehicle trace and is linked to a corresponding position node of the respective vehicle trace graph by a position constraint. This vehicle trace graph may be, for example, a Bayesian Factor Graph as described above.

In method 300, a third step 330 comprises selecting from the alignment context, for each of the vehicle traces, a respective set of observed positions corresponding to observations in said vehicle trace.

For each of the vehicle traces, the selecting from the alignment context the respective set of observed positions may comprise: selecting the respective set of observed positions based on spatial proximity. In this way, identification of the type of (or class of) the road (or environment or stationary) feature for the observed positions is not required. Similarly, identification of the type of (or class of) the road (or environment or stationary) feature for the observations is not required.

For example, for each observation, observed positions may be selected for the respective set if they fall within a threshold distance from a position of (the respective road feature of) the respective observation. For example, all observed positions within a threshold distance of an observation (position) of a road feature may be selected.

Additionally or alternatively, for each observation, the "K" nearest observed positions may be selected for the respective set, where K is a positive integer.

For each of the vehicle traces, the selecting from the alignment context the respective set of observed positions may comprise: identifying one or more feature matches between the road features for the observed positions and the road features for the respective observations; and including observed positions in the respective set for which there is a feature match.

A feature match may be identified if the road feature for an observed position and a road feature for an observation are identified (or classified or labelled) as the same class or same type of feature. For example, a class or type of feature may be "stop sign".

A feature match may be identified if the road feature for an observed position and a road feature for an observation are identified (or classified or labelled) as a similar class or similar type of feature. For example, each class or type of feature may be assigned a position in a feature hierarchy. For example, a feature hierarchy may specify that "*stop sign*" is a feature type/class which descends from (or is a subset of) the feature type/class of *"road sign".* Other feature type/classes may also descend from *"road sign"* such as "*warning sign"* or "*clearway sign".* If a road feature for an observation is identified as "*stop sign*", a feature match may be identified for any observed position identified as *"road sign"* or any class descending from *"road sign",* even if not "*stop sign".* This may reduce the impact of errors or inconsistencies in feature type/class identification.

It will be appreciated that for each observation, observed positions may be selected for the respective set based on a combination of feature matching and spatial proximity metrics.

For example, for each of the vehicle traces, the selecting from the alignment context the respective set of observed positions may comprise: identifying one or more feature matches between the road features for the observed positions and the road features for the respective observations; and including observed positions in the respective set for which there is a feature match and for which the corresponding matched observed position is located within a threshold distance of the observation (position).

It will also be appreciated that the respective set of observed positions may comprise all observed positions of the alignment context. That is, the respective set need not be a subset.

In method 300, a fourth step 340 comprises adjusting (or optimizing) each vehicle trace based on discrepancies (or differences, or comparison) between the observations of the trace and the corresponding observed positions in the selected set of observed positions. The adjusting may be adjusting to align each vehicle trace to the alignment context.

The adjusting may comprise: adjusting the (shape of) the path defined by the respective vehicle trace (and thereby changing the shape of the (estimated) trajectory of the vehicle); and/or translation of the path defined by the respective vehicle trace (relative to Earth); and/or adjusting the positions of one or more the observations relative to respective path.

The adjusting each vehicle trace may be further based on a positional uncertainty (e.g. noise modelling) of at least one of: a) the observations of the respective trace; and b) the path of the respective trace.

For example, the adjusting (or optimizing) may be performed based on the constraints and/or the confidence values. For example, a noise model (or noise variance) may be assigned to (or associated with) each respective vehicle trace path, each respective observation and each observed position in the respective selected set. The respective noise models may be selected based on (or to reflect) the respective confidence scores (or values) - for example parameters (e.g. variance) of a noise model may be proportional to confidence scores. Additionally or alternatively, the respective noise models may be selected based on (or to reflect) the (soft) constraints. The adjusting may be performed to minimize a combined noise based on the respective noise models for each respective vehicle trace path, each respective observation and each observed position in the respective selected set.

In the adjusting, any hard constraints are obeyed. Any soft constraints are incorporated as penalties on the adjustment (optimization). The penalties bias the adjustment to obey the soft constraints. The penalties may be implemented via the noise models.

Where a vehicle trace is represented as a vehicle trace graph, the adjusting (optimizing) of that vehicle trace may comprise adjusting (or optimizing) each vehicle trace graph by constraining the positions of the observation nodes relative to the corresponding observed positions in the selected set of observed positions. The graph representation (or formulation) is particularly effective for capturing the interdependencies in the relationships between (or constraints of) each respective vehicle trace path, each respective observation and each observed position in the respective selected set. An example of such graph optimization is described later.

Where the selected set of observed positions comprise all observed positions of the alignment context, different weights may be assigned to different observed positions such that less relevant observed positions do not skew the alignment. For example, for each observation (position), each observed position may be assigned a weight, with the weight decreasing with increasing distance from the observation (position). Each weight may be a value between 0 and 1, and may be applied multiplicatively to the contribution of its respective observed position. In this way, the contribution to the adjusting step of likely less relevant observed positions is reduced.

Method 300 may further comprise a fifth optional step of updating the alignment context based on the observations of the vehicle traces; and aligning one or more subsequent vehicle traces to the updated alignment context. The aligning the one or more subsequent vehicle traces may comprise repeating steps 310, 320, 330 and 340 with the updated alignment context instead of the (initial) alignment context and with the one or more subsequent vehicle traces instead of the (initial) vehicle traces.

The updating the alignment context may comprise generating one or more new observed positions (in the alignment context) corresponding to one or more of the observations. That is, one or more of the observations may be added to the alignment context as observed positions. For each observation, the estimate of the observation error 237 could be used to provide (or derive) the confidence value for the respective observed position (or location) relative to (or within) the geographical area.

Where a path travelled by a vehicle is partially contained within the geographical area, the respective vehicle trace extends beyond the geographical area. Where a vehicle trace extends beyond the geographical area, the updating the alignment context may comprise generating one or more new observed positions (in the alignment context) corresponding to one or more of the observations (of that respective vehicle trace), wherein the new observed positions are observed positions outside of the geographical area (and are of road (or stationary) features outside of the geographical area). In this way, more generally, one or more of the observed positions of the alignment context may correspond to road (or environment) features outside of the geographical area and from a second area adjacent to the geographical area. Incorporating observed positions outside of the geographical area in an alignment context for that geographic area reduces edge effects which may otherwise cause alignment (or adjustment) errors at the edges of the geographical area. Edge effects are reduced because, for observations of the vehicle traces near the edges of the geographical area, corresponding observed positions are available for selection (even outside of the geographical area). If the observation (position) is of a feature (just) outside of the geographical area, using corresponding observed positions outside of the geographical area will reduce an erroneous forcing of the observation (position) into the geographical area and provides further information for the true position of that observed feature.

The one or more observations upon which the updating of the alignment is performed (e.g. the one or more observations which may be added to the alignment context to generate the updated alignment context) may be observations of the obtained vehicle traces (that are not adjusted or optimized). Alternatively, the one or more observations upon which the updating of the alignment is performed (e.g. the one or more observations which may be added to the alignment context to generate the updated alignment context) may be observations of the adjusted vehicle traces.

The updating the alignment context may further comprise determining whether a number of observed positions (in the alignment context) for a subregion of the geographical area exceeds a pre-determined number and, if the pre-determined number is exceeded, selectively removing one or more of the observed positions for the subregion. This advantageously limits the computational burden associated with the adjusting step by limiting the number of observed positions in regions of the alignment context. By limiting the number of observed positions by subregion, rather than across the geographical area, improved coverage of features of the geographical area is enabled. In this way, an effective representation of the whole geographical area, with a spread of observed positions across the geographical area (rather than them being concentrated in frequently traversed sub regions) is obtained.

The selective removing may be performed using (or based on) timestamps (or more broadly, timing information) of the observed positions for the subregion. For example, the selectively removing may be performed to ensure that retained observed positions cover different times of day (and hence include observed positions observed at night as well observed positions observed during the day). Additionally or alternatively, the selectively removing may be performed to equalize the temporal coverage. For example, in addition to making sure that there are observations for a range of different times of the day, the selectively removing may be performed such that each time slot (of the day) ends up with a similar amount of observations. This can be done by adjusting the removal likelihood of an observation based on the number of observations its time slot has relative to the other time slots. This prevents time slots with peak traffic (e.g. rush hour) dominating the data, even if observations from all time slots are present, and since, for example, overall GNSS bias tends to shift over the day, the bias is less likely to cancel out on average as the bias of the rush hour slot tends to dominate in the result.

Additionally or alternatively, the selectively removing may be performed to ensure that retained observed positions cover different seasons or days of the week. In this way, non-stationary but recurring features may be captured by the alignment context which may be particularly advantageous in areas where there are few detectable (or identifiable or classifiable) features. It may also reduce biases in the alignment context.

Additionally or alternatively, the selectively removing may be performed based on a determined or estimated noise (e.g. a noise covariance) of the observed positions. In this way, higher noise observed positions may be removed in preference of lower noise observed positions, so as to increase the accuracy of the alignment context.

The selectively removing observed positions from the alignment context may be based on respective ages of said observed positions (observation age, time stamp). For example, earlier (or older) observed positions may be selectively removed ahead of (or before or in preference to) later (or newer or younger) observed positions. In this way, the observed positions more accurately represent the present geographical area. For example, observed positions associated with road features which have been removed/destroyed will be replaced with observed positions associated with road features still present in the geographical area over time. This selective removal also means that erroneous observed positions will gradually decay from the model, improving its accuracy.

The selectively removing observed positions from the alignment context may be based on an observed age of the observed road feature. For example, road features observed to be older may be more likely to be retained (and not selectively removed) as they may be more likely to be stationary features than transient features. This allows the alignment context to more accurately represent the geographical area, since features present only briefly are less likely to be captured by the alignment context.

Ground control points may be excluded from the selective removing. This ensures that the alignment context retains the high confidence observed positions of the ground control points, which can be used to increase the accuracy of the localisation.

Where the alignment context is stored as a spatial hash table (or a hash grid), the spatial hash table may comprise: a plurality of structures (or cell, buckets or slots), each structure corresponding to a respective geographical subregion of the geographical area and identified by a respective hash value; wherein each structure comprises the pre-determined number of observed position fields, wherein the spatial hash table is arranged to store the observed positions of the alignment context in the corresponding observed position fields. It will be appreciated that, instead of each structure comprising the pre-determined number of observed position fields, a local limit may be enforced based on a spatial distance from a query point. In other words, the selectively removing may be performed to limit the number of observed positions within the spatial distance from the query point to be less than or equal to a pre-determined number. The area covered by all regions within the spatial distance from the query point may overlap multiple structures.

To index the spatial hash table, linear probing may be used. As is typical for hash tables, each structure can be queried in constant time. Linear probing allows a search to be performed on a continuous chunk of memory, since the data stored in one continuous array.

The method 300 may further comprise, in one or more additional steps, generating or updating, based on the adjusted vehicle traces, at least one of map and traffic data. The method 300 may further comprise providing the at least one of map and traffic data to at least one of a driver assistance system, an autonomous driving system, and a navigation system. Additionally or alternatively, the method 300 may further comprise executing, based on the map or traffic data, a control function of at least one of a driver assistance system, an autonomous driving system, and a navigation system.

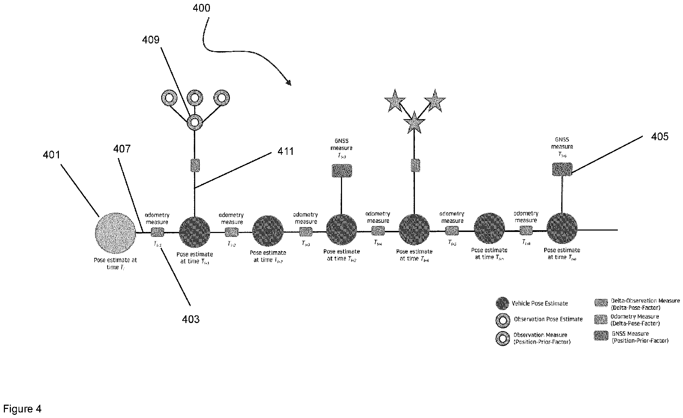

**Figure 4** schematically illustrates an example of a vehicle trace 400. The example vehicle trace 400 may be used in method 300. The example vehicle trace 400 may be a type of vehicle trace 230.

The vehicle trace 400 is implemented as a graph.

The vehicle trace graph 400 comprises (or has) a number of vehicle position nodes 401. Each vehicle position node 401 represents a vehicle pose estimate for a vehicle traversing a geographical area. For example, each vehicle node 401 may be (or represent) estimated vehicle positions (or vehicle poses) 231.

The vehicle position nodes 401 are connected by edges 407. The edges 407 between the vehicle position nodes 401 represent a consecutive order of pose estimates and hence a vehicle path for that vehicle. For example, a vehicle position node 401 representing a position estimate at time *Tᵢ* is connected by an edge 407 to a vehicle position node 401 representing a position estimate at time *T*_{*i*+1}, but not (directly) by an edge 407 to a vehicle position node representing a position estimate at time *T*_{*i*+2}. On the other hand, the vehicle position node 401 representing the position estimate at time *T*_{*i*+1} is (directly) connected by an edge 407 to the vehicle position node 401 representing the position estimate at time *T*_{*i*+2} and so forth.

The pose estimates (and hence the vehicle position nodes 401) are (or were) generated using odometry measurements 403 and GNSS measurements 405 from vehicle sensors. For example, GNSS measurements 405 may be used to define one or more of the pose estimates (and hence one or more of the vehicle position nodes 401), with intermediate pose estimates between the GNSS defined pose estimates (and hence other ones of the vehicle position nodes 401) being defined by the odometry measurements 403. Additionally or alternatively, the pose estimates (and hence the vehicle position nodes 401) may be generated using sensor fusion of the odometry measurements 403 and the GNSS measurements 405.

The vehicle trace graph 400 comprises (or has) a number of observation nodes 409. Each observation node 409 represents an estimated position of an observed feature (which may be a road feature). For example, each observation node 409 may be (or represent) an observation 235.

The estimated position of the observed feature is a relative position, relative to a vehicle pose estimate. Thus, each observation node 409 is connected to a respective vehicle position node 401 by an edge 411. The edge 411 (between an observation node 409 and a vehicle position node 401) represents the relationship between (or displacement between) the estimated position of an observed feature (represented by that observation node 409) and a vehicle pose estimate (represented by that vehicle position node 401).

Each vehicle position node 401 is soft constrained by probabilistic factors. This means that each vehicle position node 401 has an associated measurement (an estimated vehicle pose) and an associated noise model.

Each observation node 409 is soft constrained by probabilistic factors. This means that each observation node 409 has an associated measurement (an estimated position of an observed feature (and optionally an estimated classification of the observed feature)) and an associated noise model.

The vehicle trace graph 400 therefore captures the internal relationships of the vehicle trace and the respective connections between the estimated vehicle poses and the observed features.

The vehicle trace graph 400 can be adjusted as per the fourth step 340 of method 300. This adjustment comprises optimizing each vehicle trace graph 400 based on discrepancies (or differences, or comparison) between the observation nodes 409 and corresponding observed positions in a selected set of observed positions from an alignment context. The adjustment also takes into account the internal relationships of the vehicle trace graph 400 as well as the noise models.

This can be condensed into a least-squares optimization problem, which maximises a joint probability of each observation node 409 and its corresponding observed positions in the selected set representing the same (road) feature (at the same position/location). The optimization is performed across all observation nodes 409 in light of their respective relationships (as defined by the vehicle trace graph 400).

This least-squares optimization problem may be solved by a number of different algorithms such as the Levenberg-Marquardt algorithm or the Gauss-Newton algorithm. The least-squares optimization problem may be solved with gradient methods as described at https://en.wikipedia.org/w/index.php?title=Non-linear least squares&oldid=1228984900, the entire contents of which are incorporated herein by reference.

The choice of noise-models (for the observation nodes 409 and the vehicle position nodes 401) may be a trade-off between good trajectory-consistency/smoothness, trajectory localization accuracy and observation localization accuracy. Tuning for observation-accuracy only, could result in the trajectory being jerky, and less useful for downstream applications (e.g. lane-level traffic). Vice versa, tuning for trajectory-accuracy only may have a negative impact on observation-accuracy. The skilled person would readily appreciated different possible noise models that could be applied to the observation nodes 409 and the vehicle position nodes 401, for example, Gaussian noise models. The parameters of the noise model may be determined based on the expected error in the measurements (e.g. a confidence value/score for the measurement may be used to empirically determine a variance of the gaussian, the variance may be proportional to the confidence value).

It will be appreciated the other methods of maximizing a joint probability could be employed instead of (or in addition to) least squares optimization. For example, it will be appreciated that deep learning SLAM methods, extended Kalman filter SLAM methods and/or particle filter SLAM methods may be employed.

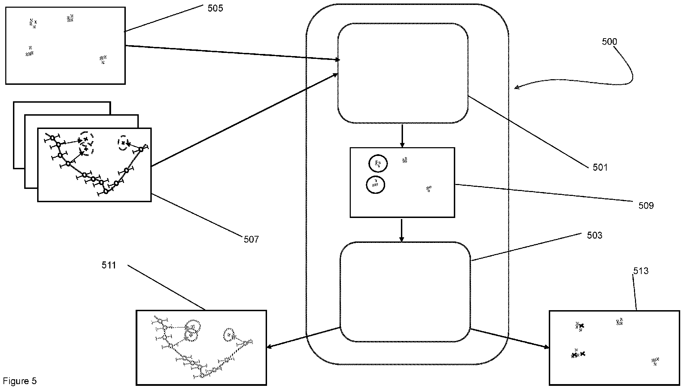

**Figure 5** schematically illustrates an example of a system 500 for aligning one or more vehicle traces (or trajectories or tracks) for (or collected by) one or more vehicles traversing (or travelling in, across or through) a geographical area (to thereby improve the spatial accuracy of the vehicle traces).

The system 500 is configured to implement method 300. That is, the system 500 comprises one or more processors configured to perform the method 300.

The system 500 comprises a selection module 501 and an output module 503.

The selection model 501 is configured to receive (as input) an alignment context 505. The alignment context 505 is for the geographical area.

The alignment context 505 may, for example, be received from memory, via telemetry or may be input by a user.

The alignment context 505 comprises a plurality of observed positions of road (or environment or stationary) features. The alignment context 505 also (optionally) comprises for each (observed) road feature, a respective indication of the class of that feature. The class may be, for example "road sign" (or define a particular type of road sign) or "road marking" (or define a particular type of road sign). The observed positions and the respective indications of their class may be derived from vehicle sensors of vehicles that have previously traversed the geographical area. The alignment context 505 may be defined as (or stored as) a map of the geographical area, with markings on the map (e.g. crosses as illustrated) indicating the observed positions. It will be appreciated that there are many other ways in which the alignment context 505 may be defined or stored. For example, the alignment context 505 may comprise a list (or data structure) comprising a latitude and longitude for each observed feature, a table or a spatial hash table (or structure).

The alignment context 505 may be alignment context 250 and the plurality of observed positions may be observed positions 251.

The selection model 501 is configured to receive (as input) one or more vehicle traces 507. Each vehicle trace 507 is for a vehicle traversing the geographical area.

Each vehicle trace 507 may, for example, be received from memory, via telemetry (e.g. directly from the vehicle it corresponds to or from a central vehicle trace server) or may be input by a user.

Each vehicle trace 507 defines a path travelled by the respective vehicle across the geographical area. Each respective path defines a) a trajectory of the vehicle; b) a positioning of the trajectory of the vehicle relative to the geographical area.

To define its respective path, each vehicle trace 507 may comprise a plurality of vehicle position estimates and may define respective relationships (e.g. in time and/or space) between its respective vehicle position estimates.

Each vehicle trace 507 further comprises one or more observations of respective road (or environment) features observed relative to the respective path. In this way, each vehicle trace 507 further defines a set of observations, each observation indicating (or being) a position of a (respective) road (or environment) feature relative to a point on the trajectory of the vehicle.

The selection module 501 is configured to select from the alignment context, for each of the vehicle traces, a respective set of observed positions corresponding to observations in said vehicle trace. This selection may be carried out as described above for step 330 of method 300.

The selection module 501 is configured to output an indication of the respective sets of observed positions 509. This indication of the respective sets 509 may, for example, comprise a data structure storing each observation and a link (or associated list or associated group) of corresponding observed positions 509 (the respective set).

The output module 503 is configured to receive (as input) the indication of the respective sets of observed positions 509.

The output module 503 is configured to adjust (or optimize) each vehicle trace based on discrepancies (or differences or comparison) between the observations of that respective trace and the corresponding observed positions in the selected set of observed positions for that trace. The adjustment may be carried out as described above for step 340 of method 300.

The output module 503 may be configured to output the adjusted vehicle trace 511. The adjusted vehicle trace is more accurately aligned to the geographical area than the original vehicle trace 507. The additional accuracy derives from the additional information provided by the observations (and the corresponding observed positions of the alignment context). The increase in accuracy is beneficial as it allows for lane-level identification of a trajectory or path of a vehicle.

Each adjusted vehicle trace 511 may be stored in an archive or memory in such a way as to meet the performance requirements for downstream consumers. For example, observations may be stored in global coordinates such that they can be used without the corresponding vehicle trace. In practice, the data volume for the observations is often large, and storage of it can incur large costs. As such, depending on whether there is demand from downstream teams, a trace archive may not store confidence scores (or data on error or noise) for observations, only the observation positions themselves. Additionally or alternatively, each adjusted vehicle trace 511 can be stored as a complete trace or a tiled trace (i.e. a subsection of a trace). Complete traces may be more useful for analysing traffic patterns on a city-scale whereas tiled traces may be more useful for analysing statistics in a small region of interest, e.g. road blockages.

Additionally or alternatively, one or more adjusted vehicle traces 511 may be transmitted to (or used by or input to) one or more AD systems. For example, an AD system may use (or be configured to use) an aligned vehicle trace for a) localisation, by doing the localisation-part of an alignment online, using the alignment context (not the aligned traces of other vehicles); b) planning and routing, by using a AD-grade map that was built from the aligned (high-precision) observations; c) user guidance, by using aggregated/accumulated aligned traces of other vehicles, indicating average driving behavior.

For example, an AD system may use (or be configured to use) an aligned vehicle trace to infer one or more drivable paths for that vehicle using (also) its current position and its destination. For this, the aligned vehicle trace 511 may be filtered.

Additionally or alternatively, one or more adjusted vehicle traces 511 may be used to generate or update at least one of map and traffic data. For example, system 500 (or a separate compiler system) may generate (or compile or collect) an amount (or a collection or a set) of map data (referred to herein as a "tile") relating to a portion of a geographic region (for example, the geographical area) or a portion of a road network. This map data represents stationary features (such as road infrastructure features for the road network) that are relevant for vehicle navigation systems. The stationary features may be derived from the observations. The map data may include a graph representation of the road network, with the graph comprising arcs and nodes. The graph may be directed or undirected. The arcs are connected by nodes. The arcs and nodes of a map are associated with, or correspond to, road segments and connections of road segments, respectively. For the nodes, the map data comprises data for an associated point geometry, e.g. coordinates corresponding to the location of the node, or the connection, in the geographical region. Arcs have an associated road trajectory line, often referred to as a road centreline, representing the geometry of the road segment. The map data comprises data for the geometry of the arcs. The map data may store other data relating to node and/or arcs (e.g. speed limits applicable to road segments). The arcs may be derived using the path of the vehicle trace.

Using adjusted data for map making is advantageous because it is less noisy (and more accurate) than raw data.

The map data may be stored in the one or more map databases and may represent one or more geographic features, i.e. one or more map elements for, as aspects of, a road network, such as the above-described junctions/nodes and road segments lanes (or segments thereof), groups of lanes (or segments thereof), allowable manoeuvres, etc.

The updating (or generating) may be performed in response to an event, e.g. when a vehicle requests map data relating to the geographic area for the tile, or in response to the tile itself being updated (such as when map data in the one or more map databases is updated). Additionally or alternatively, updates may be performed periodically.

Based on the map or traffic data, one or more control functions of at least one of a driver assistance system, an autonomous driving system, and a navigation system may be executed.

The output module may be configured to output an updated alignment context 513. The updated alignment context 513 may be generated based on the observations of the vehicle traces as described above.

The updated alignment context 513 may be used to align subsequent vehicle traces.

When adding observations to the alignment context as observed positions, preference is given to point features (e.g. signs, poles) which are isolated (i.e. don't have close-by neighbours of the same type) and are likely to last a long time (poles from streetlights last longer than road-markings, stop-signs last longer than construction-site related signs, etc.). This increases the robustness of the alignment context. Feature filtering can be used to select observations to be added to the alignment context as observed positions. It will be appreciated that filtering may be performed, for example, when updating the alignment context and/or when selecting trace observations to use for alignment.

The updated alignment context 513 may be streamed to vehicles, where it can be used by those vehicles (e.g. by their AD system) to enhance the accuracy of their own localization by aligning their own local observations to nearby context observations.

The updated alignment context 513 may be used to generate or update a map as described above.

It will be appreciated that the selection module 501 and the output module 503 may be performed by the same hardware (or software) module, or different hardware (or software) modules. The selection module 501 and the output module 503 may be implemented on different computer systems. Additionally or alternatively, each of the selection module 501 and the output module 503 may itself be implemented on one or more computer systems.

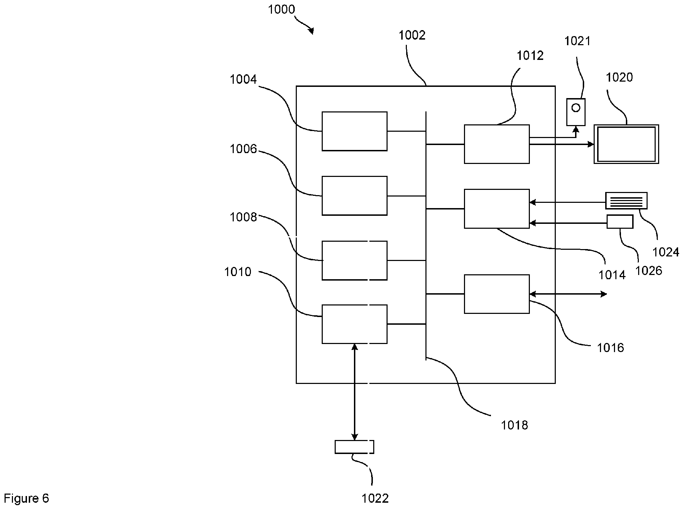

**Figure 6** schematically illustrates an example of a computer system 1000.

Method 300 may be implemented on system 1000.

One or more of scenarios 100 and 200 may be implemented on system 1000.

System 500 may be implemented on (or using) system 1000. For example, selection module 501 and/or output module 503 may be implemented on (or using) system 1000.

The system 1000 comprises a computer 1002. The computer 1002 comprises: a storage medium 1004, a memory 1006, a processor 1008, an interface 1010, a user output interface 1012, a user input interface 1014 and a network interface 1016, which may be linked together over one or more communication buses 1018.

The storage medium 1004 may be any form of non-volatile data storage device such as one or more of a hard disk drive, a magnetic disc, a solid-state-storage device, an optical disc, a ROM, etc. The storage medium 1004 may store an operating system for the processor 1008 to execute in order for the computer 1002 to function. The storage medium 1004 may also store one or more computer programs (or software or instructions or code).

The memory 1006 may be any random access memory (storage unit or volatile storage medium) suitable for storing data and/or computer programs (or software or instructions or code).

The processor 1008 may be any data processing unit suitable for executing one or more computer programs (such as those stored on the storage medium 1004 and/or in the memory 1006), some of which may be computer programs according to embodiments of the invention or computer programs that, when executed by the processor 1008, cause the processor 1008 to carry out a method according to an embodiment of the invention and configure the system 1000 to be a system according to an embodiment of the invention. The processor 1008 may comprise a single data processing unit or multiple data processing units operating in parallel, separately or in cooperation with each other. The processor 1008, in carrying out data processing operations for embodiments of the invention, may store data to and/or read data from the storage medium 1004 and/or the memory 1006.

The interface 1010 may be any unit for providing an interface to a device 1022 external to, or removable from, the computer 1002. The device 1022 may be a data storage device, for example, one or more of an optical disc, a magnetic disc, a solid-state-storage device, etc. The device 1022 may have processing capabilities - for example, the device may be a smart card. The interface 1010 may therefore access data from, or provide data to, or interface with, the device 1022 in accordance with one or more commands that it receives from the processor 1008.

The user input interface 1014 is arranged to receive input from a user, or operator, of the system 1000. The user may provide this input via one or more input devices of the system 1000, such as a mouse (or other pointing device) 1026 and/or a keyboard 1024, that are connected to, or in communication with, the user input interface 1014. However, it will be appreciated that the user may provide input to the computer 1002 via one or more additional or alternative input devices (such as a touch screen). The computer 1002 may store the input received from the input devices via the user input interface 1014 in the memory 1006 for the processor 1008 to subsequently access and process, or may pass it straight to the processor 1008, so that the processor 1008 can respond to the user input accordingly.

The user output interface 1012 is arranged to provide a graphical/visual and/or audio output to a user, or operator, of the system 1000. As such, the processor 1008 may be arranged to instruct the user output interface 1012 to form an image/video signal representing a desired graphical output, and to provide this signal to a monitor (or screen or display unit) 1020 of the system 1000 that is connected to the user output interface 1012. Additionally or alternatively, the processor 1008 may be arranged to instruct the user output interface 1012 to form an audio signal representing a desired audio output, and to provide this signal to one or more speakers 1021 of the system 1000 that is connected to the user output interface 1012.

Finally, the network interface 1016 provides functionality for the computer 1002 to download data from and/or upload data to one or more data communication networks.

It will be appreciated that the architecture of the system 1000 illustrated in figure 6 and described above is merely exemplary and that other computer systems 1000 with different architectures (for example with fewer components than shown in figure 6 or with additional and/or alternative components than shown in figure 6) may be used in embodiments of the invention. As examples, the computer system 1000 could comprise one or more of: a personal computer; a server computer; a mobile telephone; a tablet; a laptop; a television set; a set top box; a games console; other mobile devices or consumer electronics devices; etc. Additionally, it is possible that some components of the computer system 1000 are not located in the computer 1002 and are, instead, part of a computer network connected to the computer 1002 via the network interface 1016. Additionally or alternatively, the computer system 1000 may comprise multiple computers 1002, e.g. in a network of computers such as a cloud system of computing resources.

### Modifications

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, cloud etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method of aligning one or more vehicle traces for one or more vehicles traversing a geographical area, the method comprising:
obtaining an initial alignment context for the geographical area, wherein the initial alignment context comprises a plurality of observed positions of road features;
obtaining one or more vehicle traces for the one or more vehicles, each vehicle trace defining a path travelled by the respective vehicle across the geographical area, and comprising one or more observations of respective road features observed relative to the respective path;
selecting from the alignment context, for each of the vehicle traces, a respective set of observed positions corresponding to observations in said vehicle trace; and
adjusting each vehicle trace based on discrepancies between the observations of the trace and the corresponding observed positions in the selected set of observed positions, to align each vehicle trace to the alignment context.

2. The method of claim 1, further comprising updating the alignment context based on the observations of the vehicle traces; and
aligning one or more subsequent vehicle traces to the updated alignment context.

3. The method of claim 2, wherein the updating the alignment context comprises generating one or more new observed positions corresponding to one or more of the observations.

4. The method of claim 3, wherein the one or more of the observations are observations of the obtained vehicle traces.

5. The method of claim 3, wherein the one or more of the observations are observations of the adjusted vehicle traces.

6. The method of any one of claims 2-5, wherein the updating the alignment context further comprises determining whether a number of observed positions for a subregion of the geographical area exceeds a pre-determined number and, if the pre-determined number is exceeded, selectively removing one or more of the observed positions for the subregion; and optionally
wherein the selective removing is performed using timestamps of the observed positions for the subregion.

7. The method of any one of claims 2-6, wherein the updating the alignment context comprises selectively removing observations from the alignment context based on respective ages of said observations.

8. The method of any one of the preceding claims, further comprising obtaining, for each vehicle trace, a respective vehicle trace graph;
wherein each vehicle trace graph comprises a respective set of vehicle positions connected by respective constraints and a respective set of observation nodes;
wherein, for each vehicle trace graph, the respective set of vehicle positions and the respective constraints define the path travelled by the respective vehicle;
wherein each observation node corresponds to a respective observation of the respective vehicle trace and is linked to a corresponding position node of the respective vehicle trace graph by a position constraint; and
wherein the adjusting each vehicle trace comprises adjusting each vehicle trace graph by constraining the positions of the observation nodes relative to the corresponding observed positions in the selected set of observed positions.

9. The method of any one of the preceding claims, wherein one or more of the observed positions correspond to road features outside of the geographical area and from a second area adjacent to the geographical area.

10. The method of any one of the preceding claims, wherein one or more of the observed positions are ground control points.

11. The method of any one of the preceding claims, wherein for each of the vehicle traces, the selecting from the alignment context the respective set of observed positions comprises at least one of:
a) selecting the respective set of observed positions based on spatial proximity; and
b) identifying one or more feature matches between the road features for the observed positions and the road features for the respective observations, and including observed positions in the respective set for which there is a feature match.

12. The method of any one of the preceding claims, wherein the adjusting each vehicle trace is further based on a positional uncertainty of at least one of:
a) the observations of the respective trace; and
b) the path of the respective trace.

13. A system comprising one or more processors configured to perform the method of any one of claims 1-12.

14. A computer program comprising instructions which, when executed by one or more processors, cause the one or more processors to carry out the method of any one of claims 1-12.

15. A computer readable medium storing the computer program of claim 14.
